# EUROPÄISCHE PATENTANMELDUNG

(11) **EP 1 826 539 A2**
(43) Veröffentlichungstag der Anmeldung: **29.08.2007**
(21) Anmeldenummer: 06405533.8
(22) Anmeldetag: 19.12.2006
(51) Int. Cl.: G01F 23/296, G01N 9/10

(54) **Verfahren und Sensorvorrichtung zur Bestimmung der Dichte und des Füllstandes einer Flüssigkeit in einem Behälter**

(30) Priorität: 24.02.2006 CH 2922006
(71) Anmelder: Baumer Electric AG, 8500 Frauenfeld (CH)
(72) Erfinder: Nölle, Christoph, 78462 Konstanz (DE); Mauch, Rainer, 78247 Hilzingen (DE); Wehrle, Wolfgang, 78467 Konstanz (DE)
(74) Vertreter: Gachnang, Hans Rudolf

(57) **Zusammenfassung**

Die Dichte einer Flüssigkeit (11) in einem Behälter (1) wird nach dem Prinzip eines Aräometers ermittelt, wobei ein nach dem Puls-Echo-Verfahren arbeitender Ultraschallsensor (3) die Auftauchhöhe eines an einem Schwimmer (13) nach oben aus der Flüssigkeit (11)ragenden Messstabes (17) erfasst. Der Messstab (17) wird von einer Führungsmanschette (19) geführt, welche zugleich als Referenzreflektor (20) zur Bestimmung der Schallgeschwindigkeit dient.

## Beschreibung

Gegenstand der Erfindung ist ein Verfahren und eine Sensorvorrichtung zur Bestimmung der Dichte und zur Erfassung des Füllstandes einer Flüssigkeit in einem Behälter gemäss Oberbegriff der Patentansprüche 1 und 6.

Im Offsetdruckverfahren werden die nicht druckenden Stellen der Druckplatte eines Druckplattenzylinders mit einem so genannten Feuchtwasser oder Wischwasser befeuchtet, welches zusätzlich zu Wasser Alkohol oder einen Alkoholersatzstoff und besondere Zusatzstoffe enthält. Es ist erwünscht, das Mischungsverhältnis dieser Komponenten möglichst konstant zu halten. Der Alkohol oder Alkoholersatzstoff verdunstet relativ schnell und der verdunstete Teil muss kontinuierlich ersetzt werden.
Aus der EP-B1-0 158 142 ist eine Vorrichtung bekannt, die zur Bestimmung und Konstanthaltung des Mischungsverhältnisses einer Flüssigkeitsmischung, insbesondere zur Bestimmung und Konstanthaltung der Alkoholkonzentration des beim Offsetdruckverfahren verwendeten Feuchtwassers geeignet ist. Die Vorrichtung enthält ein Gefäss, das mit einem Zulauf und einem Überlauf versehen ist und in einem die Flüssigkeitsmischung als Strömung führenden Flüssigkeitskreislauf angeordnet ist. In den Flüssigkeitskreislauf mündet eine Beimischleitung für den Alkohol mit einem kontrollierten Ventil, das in Abhängigkeit von der Eintauchtiefe eines Schwimmkörpers in der Flüssigkeitsmischung im Gefäss betätigt wird.
Das Wasser als Hauptbestandteil und die Zusatzstoffe der Flüssigkeitsmischung haben unterschiedliche Dichten. Dadurch können sich Messfehler ergeben, wenn die Dichte der Flüssigkeitsmischung als Mass für ihren prozentualen Alkoholgehalt gemessen wird. Um den Fehler zu minimieren, darf die Vorrichtung erst dann auf einen Bezugswert abgeglichen werden, wenn das Feuchtwasser alle erforderlichen Zusatzstoffe enthält und die beim Betrieb der Druckmaschine übliche Betriebstemperatur erreicht hat. Aus der DE-A1-4426078 ist eine weitere Vorrichtung zur Messung und Konstanthaltung des prozentualen Anteils eines flüchtigen Bestandteils eines Flüssigkeitsgemisches in einer Druckmaschine bekannt. Der Anteil des flüchtigen Bestandteils wird indirekt über eine Dichtemessung bestimmt. Dabei wird in einem Behälter mit dem zu untersuchenden Flüssigkeitsgemisch nach dem Prinzip eines Aräometers die Eintauchtiefe eines Schwimmers bestimmt. Ein Messgerät erfasst optisch oder magnetisch das obere Ende eines nach oben aus dem Schwimmer wegragenden Messstabes. Der Behälter ist mit einem in der Höhe verstellbaren Überlauf versehen. Nach dem Beimischen der Zusatzstoffe und dem Erreichen der üblichen Betriebstemperatur wird das Niveau des Überlaufs so eingestellt bzw. geeicht, dass das obere Messstabende bei einer Referenzmarke zu liegen kommt. Ändert sich die Dichte des Flüssigkeitsgemisches aufgrund der Verdunstung des flüchtigen Bestandteils, hat dies eine Änderung des Schwimmer-Niveaus zur Folge, welche vom Messgerät erfasst wird und zur Regelung eines Ventils für die Zufuhr der flüchtigen Komponente zum Flüssigkeitsgemisch genutzt wird.
Die Eichung durch Verstellen des Flüssigkeitsüberlaufs am Behälter ist eher umständlich. Die Vorrichtung umfasst nebst dem Messbehälter einen geschlossenen Aufbereitungsbehälter zum Aufbereiten des Flüssigkeitsgemischs und eine Feuchtwasserwanne, von wo aus das Feuchtwasser durch Walzen eines Feuchtwerkes auf die Druckplatte am Umfang eines Druckplattenzylinders übertragen wird. Es sind mehrere Kreisläufe mit mehreren unabhängigen Pumpen vorgesehen, welche die Förderung von Flüssigkeit zwischen diesen Behältern ermöglichen. Im Weiteren muss bei dieser Vorrichtung die der Eichung zugrunde liegende Prozesstemperatur eingehalten werden.

Der vorliegenden Erfindung liegt die Aufgabe zugrunde, ein einfacheres Verfahren zur Bestimmung der Dichte eines Flüssigkeitsgemisches und eine Sensorvorrichtung zur Durchführung dieses Verfahrens zu schaffen.

Diese Aufgabe wird gelöst durch ein Verfahren und durch eine Sensorvorrichtung gemäss den Merkmalen der Patentansprüche 1 und 6. Vorteilhafte Ausgestaltungen des Verfahrens und der Sensorvorrichtung sind in den unabhängigen Patentansprüchen beschrieben.

Bei der vorliegenden Erfindung wird die Dichte oder eine Dichteänderung einer Flüssigkeit ebenfalls nach dem Prinzip des Aräometers erfasst, wobei die Flüssigkeit in einem Behälter gesammelt ist und die Eintauchtiefe bzw. die Auftauchhöhe eines Schwimmers erfasst wird. Ein Echolot bzw. ein nach dem Puls-Echo-Verfahren arbeitender Ultraschallsensor emittiert von oben her mit vorzugsweise keulenförmiger Richtcharakteristik Wellenpakete oder Bursts von Ultraschallwellen in Richtung des Schwimmers und der den Schwimmer umgebenden Flüssigkeitsoberfläche. Die Ultraschallwellen werden sowohl am Schwimmer als auch an der Flüssigkeitsoberfläche mindestens teilweise reflektiert und vom Ultraschallsensor als Echo wieder empfangen. Vorzugsweise umfasst der Ultraschallsensor einen Transducer, der zum wechselweisen Senden und Empfangen von Ultraschallsignalen ausgebildet und lotrecht oberhalb des Schwimmers bzw. eines am Schwimmer nach oben ragenden Stabes angeordnet ist.
Die Ultraschallwellen breiten sich mit einer Schallgeschwindigkeit aus, die sowohl von der Temperatur als auch von der Zusammensetzung des Ausbreitungsmediums abhängig ist. Bei bekannter Schallgeschwindigkeit können aus den Laufzeiten, also den Zeiten zwischen dem Aussenden eines Ultraschallbursts und dem Empfangen der zugehörigen Echos aufgrund von Reflexionen an einem oder mehreren Objekten, die Abstände zwischen dem Ultraschallsensor und diesen Objekten ermittelt werden.

Durch Auswertung der Laufzeitdifferenz zwischen dem Echo des Schwimmers (vorzugsweise wird hierfür das zuerst beim Transducer eintreffende Echo des oberen Endes des am Schwimmer aufragenden Stabes ausgewertet) und dem Echo der Flüssigkeitsoberfläche wird die Auftauchhöhe des Schwimmers aus der Flüssigkeit berechnet. Die Auftauchhöhe ist proportional zur Dichte der Flüssigkeit und eignet sich somit z.B. als Messgrösse zur Charakterisierung des prozentualen Anteils einer flüchtigen Komponente in einem Gemisch mit Flüssigkeiten unterschiedlicher Dichte. Insbesondere kann durch Auswertung der Echolaufzeiten der Anteil von Alkohol oder eines Alkoholersatzstoffes im Feuchtwasser bei Druckmaschinen bestimmt werden.
Zur Minimierung von Fehlern ist es vorteilhaft, die Schallgeschwindigkeit im Ausbreitungsmedium zu bestimmen. Dies kann bei bekannter Zusammensetzung des Ausbreitungsmediums z.B. durch Vorgabe einer Temperaturabhängigkeitskurve der Schallgeschwindigkeit in diesem Medium und durch Messung der Mediumstemperatur mit einem Temperatursensor erfolgen. Alternativ können am Schwimmer zwei in Tauchrichtung zueinander beabstandete Reflektoren ausgebildet sein, wobei einer dieser Reflektoren das obere Stabende sein kann, welches ohnehin erfasst wird. Der Quotient aus dem Abstand der beiden Reflektoren und der Laufzeitdifferenz der Echos dieser beiden Reflektoren entspricht der Schallgeschwindigkeit. Diese Lösung hat den Vorteil, dass nicht nur Temperatureinflüsse, sondern auch der Einfluss der Zusammensetzung des Ausbreitungsmediums auf die Schallgeschwindigkeit bei der Auswertung der Echolaufzeiten berücksichtigt wird. Fehler aufgrund unterschiedlicher Schallgeschwindigkeiten können somit vollständig eliminiert werden. Alternativ kann zur Bestimmung der Schallgeschwindigkeit auch ein Reflektor mit vorgegebenem festem Abstand zum Transducer verwendet werden. Vorzugsweise ist dieser Reflektor als Führung oder Gleitlager ausgebildet, welches den am Schwimmer nach oben ragenden Stab mindestens teilweise ummantelt und lediglich eine Lageänderung des Schwimmers in vertikaler Richtung zulässt. Die Echos dieser Referenzreflektoren müssen zusätzlich zu den Echos des Schwimmers bzw. des am Schwimmer aufragenden Stabes und der Flüssigkeitsoberfläche erfasst werden. Bei einer alternativen Ausgestaltung kann am Schwimmer anstelle eines Messstabes eine Messhülse ausgebildet sein, die entlang eines innen liegenden Führungsstabes geführt wird.

Der Führungsstab und die Messhülse bzw. die Führungsmanschette und der Messstab haben vorzugsweise unterschiedliche Querschnittformen, wodurch einerseits die gegenseitigen Berührungsflächen und somit Reibungskräfte und andererseits störende Kapillarkräfte minimiert werden. Die Sensoranordnung mit dem Schwimmer erfordert keinen zusätzlichen Messbehälter mit verstellbarem Überlauf, wie dies in der DE-A1-4426078 beschrieben ist. Die Messung kann direkt in einem Aufbereitungs- oder Prozessbehälter vorgenommen werden.

Zur Minimierung von Fehlern infolge von Turbulenzen, Wellen oder Strömungen der Flüssigkeit in solchen Behältern können mechanische Mittel zum Beruhigen der Flüssigkeitsoberfläche im Bereich des Schwimmers vorgesehen sein, beispielsweise ein in Bezug auf den Behälter fester oder schwimmender Schutzwall.
Anstelle der Reflexion an der Flüssigkeitsoberfläche kann auch ein zusätzlicher Reflektor in Gestalt eines weiteren Schwimmkörpers vorgesehen sein, der seine Lage relativ zur Flüssigkeitsoberfläche auch bei ändernder Dichte der Flüssigkeit nahezu beibehält.
Alternativ oder zusätzlich können der Einfluss unruhiger Flüssigkeitsoberflächen und jener von Strömungen oder Turbulenzen im in der Regel gasförmigen Medium oberhalb der Flüssigkeit z.B. durch rollende Speicherung und Mittelwertbildung aus einer vorgebbaren Anzahl aufeinander folgender Messwerte minimiert werden.

Da nebst dem Niveau des Schwimmers auch das Niveau der Flüssigkeit erfasst wird, kann dieses ebenfalls überwacht und, falls erforderlich, weiter verarbeitet werden. Insbesondere ist es möglich, beim Unterschreiten eines vorgebbaren unteren Flüssigkeitspegels ein Nachfüllen der Flüssigkeit bzw. des aus vorgemischten Komponenten zubereiteten Flüssigkeitsgemischs in den Behälter bis zu einem ebenfalls vorgebbaren oberen Flüssigkeitspegel zu veranlassen oder alternativ den Flüssigkeitspegel auf ein vorgebbares Niveau zu regeln. Voraussetzung hierfür sind entsprechende Vorratsbehälter und Stellglieder bzw. Ventile. Beim zur Illustration verwendeten Beispiel des Feuchtwassers in einer Druckmaschine kann mit der erfindungsgemässen Vorrichtung nicht nur der Verlust der flüchtigen Alkoholkomponente im Feuchtwasser ausgeglichen werden, sondern auch ein Nachfüllen von Feuchtwasser in den Prozessbehälter beim Unterschreiten eines vorgegebenen Pegels veranlasst werden.

Bei einer weiteren Ausgestaltung der Erfindung werden der Schwimmer bzw. ein mit dem Schwimmer verbundener Reflektor und allfällige weitere Reflektoren nicht von oben her, sondern von unten her erfasst. Der Ultraschallwandler ist somit innerhalb der Flüssigkeit angeordnet. Aufgrund der höheren Schallgeschwindigkeit in der Flüssigkeit und des Ausschwingverhaltens des Sendewandlers wird in diesem Fall zum Empfangen der Echos vorzugsweise ein vom Sendewandler unabhängiger weiterer Ultraschallwandler verwendet. Zur Erfassung des Flüssigkeitspegels kann z.B. ein ringartiger weiterer Schwimmkörper mit ähnlicher Dichte wie jene der Flüssigkeit und mit einer als Reflektor ausgebildeten schallharten Unterseite verwendet werden.

Anhand einiger Figuren wird die Erfindung im Folgenden näher beschrieben. Dabei zeigen
- Figur 1: einen Querschnitt durch einen Behälter mit einer ersten Ausgestaltung der erfindungsgemässen Sensoranordnung,
- Figur 2: eine Detailansicht eines Messstabs im Bereich einer Führungsmanschette,
- Figur 3: eine weitere Ausgestaltung einer Sensoranordnung mit einem Führungsstab und einer Messhülse.

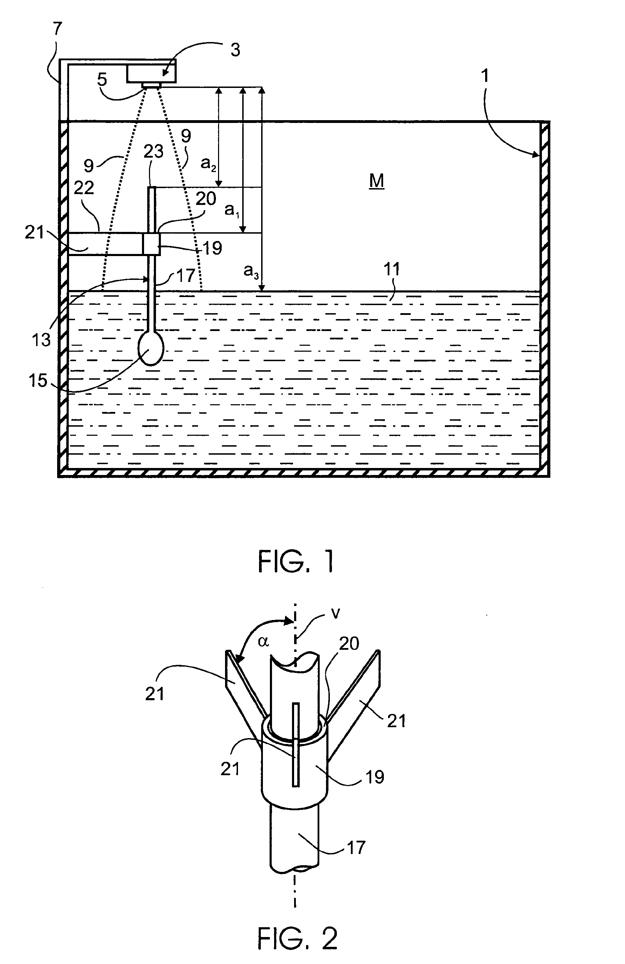

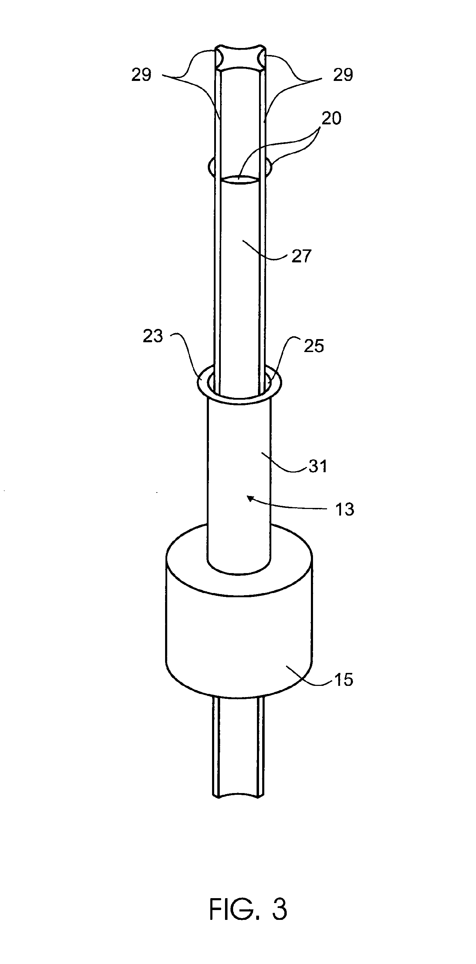

In Figur 1 ist ein Querschnitt eines Behälters 1 mit einem Ultraschall-Distanzsensor, fortan kurz Ultraschallsensor 3 genannt, dargestellt. Der Ultraschallsensor 3 umfasst einen zum Aussenden und Empfangen von Ultraschallwellen einer bestimmten Frequenz ausgebildeten Ultraschallwandler bzw. Transducer 5. Dieser ist derart ausgebildet und z.B. mittels eines Haltebügels 7 im oberen Bereich des Behälters 1 so befestigt, dass er Ultraschallpulse bzw. -bursts mit einer keulenartigen Richtcharakteristik (in Figur 1 durch die gepunkteten Linien 9 angedeutet) senkrecht nach unten in Richtung einer im Behälter 1 gesammelten Flüssigkeit 11 emittieren kann. Lotrecht unter dem Transducer 5 taucht ein Schwimmer 13 mit einem Schwimmerkörper 15 und einem nach oben ragenden Messstab 17 oder -rohr so in die Flüssigkeit 11 ein, dass der Schwimmerkörper 15 sich vollständig in der Flüssigkeit 11 befindet und der Messstab 17 teilweise aus der Flüssigkeit 11 herausragt. Ortsfest zum Ultraschallsensor 3 umgreift oder ummantelt eine Führungsmanschette 19 den Messstab 17 mindestens teilweise, sodass sich der Schwimmer 13 nur noch in vertikaler Richtung unterhalb des Transducers 5 geführt verschieben kann. Bei einer vorteilhaften Ausgestaltung der Erfindung ist die Führungsmanschette 19 klammerartig aus einem C-förmigen, elastischen Kunststoffprofil geformt. Bei derartigen Führungsklammern bzw. -manschetten 19 kann der Messstab 17 des Schwimmers 13 einfach seitlich in die Führung eingeschnappt und wieder daraus gelöst werden. Das Profil des von der Führungsmanschette 19 gebildeten Führungskanals entspricht bis auf ein geringfügiges Spiel dem Profil des Messstabs 17. Dieses kann beispielsweise rund, elliptisch, eckig oder in beliebiger anderer Weise ausgebildet sein, z.B. mit Führungsfedern, welche in entsprechende Nuten an der Innenseite der Führungsmanschette 19 eingreifen und eine Verdrehsicherung darstellen.
Die Führungsmanschette 19 kann z.B. mittels eines oder mehrerer schmaler Haltearme 21 am Behälter 1 oder am Haltebügel 7 bzw. an der Haltekonstruktion für den Ultraschallsensor 3 befestigt sein. Der oder die Haltearme 21 können z.B. wie in Figur 1 dargestellt als dünne, vertikal angeordnete Platten ausgebildet sein, wobei deren obere Stirnseiten 22 bündig zur Oberseite der Führungsmanschette 19 und somit im gleichen Abstand zum Transducer 5 angeordnet sind. Alternativ können an der Führungsmanschette 19 auch ein oder mehrere radial nach aussen und schräg nach oben oder unten gerichtete Haltearme 21 ausgebildet sein, die mit der Verschiebungsachse v des Schwimmers 13 einen Winkel α von vorzugsweise etwa 30° bis etwa 60° einschliessen. In Figur 2 ist ein Detail einer solchen Anordnung mit drei Haltearmen 21 dargestellt. Bei derartigen Anordnungen werden die Schallwellen des Transducers 5 nicht zurück zum Transducer 5, sondern in andere Richtungen reflektiert, sodass sie nicht als störende Echos erfasst werden. Selbstverständlich können die Haltearme 21 oder andere Elemente auch auf andere Weise so angeordnet werden, dass störende Echos dieser Elemente möglichst nicht auftreten können. Zur Verhinderung von Störungen durch Mehrfachreflexionen und den damit verbundenen Mehrfachechos kann z.B. der Transducer 5 leicht geneigt zur Flüssigkeitsoberfläche angeordnet werden (nicht dargestellt). So können nur Echos erster Ordnung auf den Transducer 5 auftreffen, nicht jedoch Echos höherer Ordnungen.
Die Oberseite der Führungsmanschette 19 ist vorzugsweise als Referenzreflektor 20 zum Bestimmen der Schallgeschwindigkeit im gasförmigen Medium M oberhalb der Flüssigkeit 11 ausgebildet und im festen Abstand a₁ zum Transducer 5 angeordnet. Vom Transducer 5 emittierte Ultraschallbursts werden am Referenzreflektor 20 reflektiert und können vom Ultraschallsensor 3 als Echo wieder empfangen und ausgewertet werden. Der Quotient aus dem Abstand a₁ und der Laufzeit t₁ des Referenzechos entspricht der jeweiligen Schallgeschwindigkeit C_{M} im Medium M.
Das obere Ende des Messstabs 17 ist hingegen als Reflektor ausgebildet. Sein Abstand a₂ ist variabel. Er hängt vom Pegel der Flüssigkeitsoberfläche im Behälter 1 und von der Dichte der Flüssigkeit 11 im Behälter 1 ab. Der Flüssigkeitspegel ist durch den Abstand a₃ zum Transducer 5 bestimmt. Er kann durch Auswertung der zugehörigen Echolaufzeit durch Multiplikation mit der zuvor bestimmten Schallgeschwindigkeit C_{M} berechnet werden. Die Differenz a₃ - a₂ entspricht der Auftauchhöhe des Schwimmers 13 und ist proportional zur Dichte der Flüssigkeit 11 bzw. des Flüssigkeitsgemisches. Ändert sich diese Dichte z.B. infolge des Verdampfens einer flüchtigen Flüssigkeitskomponente, kann über entsprechende Stellglieder diese Komponente wieder zudosiert bzw. der prozentuale Anteil dieser Komponente an der Flüssigkeit 11 geregelt werden. Sinkt der Flüssigkeitspegel unter einen vorgebbaren Wert (bzw. übersteigt a₃ einen vorgebbaren Wert), was z.B. durch Verbrauch der Flüssigkeit 11 in einem Prozess geschehen kann, so kann beispielsweise eine Steuerung angewiesen werden, zusätzliche Flüssigkeit 11 aufzubereiten und in der gewünschten Konzentration dem Behälter 2 zuzuführen, bis der Flüssigkeitspegel einen weiteren Grenzwert erreicht hat.
Bei einer weiteren Ausgestaltung der Erfindung gemäss Figur 3 ist der Schwimmer 13 als vorzugsweise rotationssymmetrischer Körper mit einer Axialbohrung 25 ausgebildet. Der Schwimmer 13 ist auf einem Führungsstab 27 in Richtung der Führungsstabachse verschiebbar und vorzugsweise auch um diese Stabachse drehbar gelagert. Der Führungsstab 27 hat eine Querschnittform, welche von der kreisrunden Axialbohrung 25 abweicht. Vorzugsweise sind am Führungsstab 27 drei oder vier radial nach aussen ragende Rippen 29 als Führungselemente für eine am Schwimmer 13 nach oben ragende Messhülse 31 mit einem ringförmigen, als Reflektor 23 dienenden oberen Rand, ausgebildet. Der Referenzreflektor 20 kann z.B. im oberen Bereich und der Ultraschallsensor 3 (nicht dargestellt). z.B. am oberen Ende des Führungsstabs 27 befestigt werden.

## Patentansprüche

1. Verfahren zur Bestimmung der Dichte einer Flüssigkeit (11) in einem Behälter (1), wobei ein Schwimmer (13) mit einem Messstab (17) teilweise in die Flüssigkeit (11) eintaucht, **dadurch gekennzeichnet, dass** der Abstand (a₂) zwischen einem Ultraschallsensor (3) und einem am Messstab (17) ausgebildeten Reflektor (23) und der Abstand (a₃) zwischen dem Ultraschallsensor (3) und der Flüssigkeitsoberfläche durch Messen der zugehörigen Echolaufzeiten bestimmt werden, und dass die Differenz zwischen diesen Abständen (a₃) und (a₂) ermittelt wird.

2. Verfahren nach Anspruch 1, **dadurch gekennzeichnet, dass** zusätzlich die Echolaufzeit für mindestens einen Referenzreflektor (20) in vorgegebenem Abstand (a1) vom Ultraschallsensor (3) gemessen wird, dass die Schallgeschwindigkeit oder ein Korrekturfaktor für die Schallgeschwindigkeit berechnet werden, indem die Echolaufzeit bzw. die Echolaufzeiten zu dem oder den Referenzreflektoren (20) ausgewertet werden, und dass bei der Ermittlung der Abstände (a2, a3) des Reflektors (23) und der Flüssigkeitsoberfläche vom Ultraschallsensor (3) eine Verarbeitung der zugehörigen Echolaufzeiten in Verbindung mit der ermittelten Schallgeschwindigkeit oder mit dem Korrekturfaktor für die Schallgeschwindigkeit erfolgt.

3. Verfahren nach einem der Ansprüche 1 oder 2, **dadurch gekennzeichnet, dass** ein oder mehrere Vergleichswerte für das Flüssigkeitsniveau und/oder für die Dichte der Flüssigkeit (11) vorgegeben werden.

4. Verfahren nach Anspruch 3, **dadurch gekennzeichnet, dass** beim Unterschreiten eines unteren Flüssigkeitsniveaus ein Nachfüllen von Flüssigkeit (11) in den Behälter (1) initiiert wird und/oder dass beim Überschreiten eines oberen Flüssigkeitsniveaus ein Stellglied zum Ablassen von Flüssigkeit (11) aus dem Behälter (1) oder zum Stoppen des Nachfüllens von Flüssigkeit (11) in den Behälter (1) betätigt wird.

5. Verfahren nach Anspruch 3, wobei die Flüssigkeit (11) eine flüchtige Komponente umfasst, **dadurch gekennzeichnet, dass** beim Über- oder Unterschreiten eines Vergleichswertes für die Dichte ein Zudosieren der flüchtigen Komponente in die Flüssigkeit (11) veranlasst wird.

6. Sensorvorrichtung zur Bestimmung der Dichte einer Flüssigkeit (11) in einem Behälter (1), wobei ein Schwimmer (13) mit einem Messstab (17) oder einer Messhülse (31) teilweise in die Flüssigkeit (11) eintaucht, **dadurch gekennzeichnet, dass** ein nach dem Puls-Echo-Verfahren arbeitender Ultraschallsensor (3) zum Erfassen eines am Messstab (17) bzw. der Messhülse (31) ausgebildeten Reflektors (23) vorgesehen ist.

7. Sensorvorrichtung nach Anspruch 6, **dadurch gekennzeichnet, dass** ein Transducer (5) des Ultraschallsensors (3) derart oberhalb des am Messstab (17) bzw. der Messhülse (31) ausgebildeten Reflektors (23) angeordnet ist, dass sowohl der Reflektor (23) als auch ein Teil der Oberfläche der Flüssigkeit (11) und ein relativ zum Ultraschallsensor (3) ortsfest angeordneter Referenzreflektor (20) innerhalb des Erfassungsbereichs des Ultraschallsensors (3) liegen.

8. Sensorvorrichtung nach einem der Ansprüche 6 oder 7, wobei der Schwimmer (13) einen Messstab (17) umfasst, **dadurch gekennzeichnet, dass** eine Führungsmanschette (19) zum Führen und zum Beschränken der Bewegungsfreiheit des Messstabs (17) ortsfest zum Behälter (1) oder zum Ultraschallsensor (3) angeordnet ist, und dass ein Teil dieser Führungsmanschette (19) als Referenzreflektor (20) ausgebildet ist.

9. Sensorvorrichtung nach einem der Ansprüche 6 oder 7, wobei der Schwimmer (13) eine Messhülse (31) umfasst, **dadurch gekennzeichnet, dass** ein Führungsstab (27) zum Führen und zum Beschränken der Bewegungsfreiheit der Messhülse (31) ortsfest zum Behälter (1) oder zum Ultraschallsensor (3) angeordnet ist, und dass ein Teil dieses Führungsstabes (27) als Referenzreflektor (20) ausgebildet ist.

10. Sensorvorrichtung nach einem der Ansprüche 8 oder 9, **dadurch gekennzeichnet, dass** der Messstab (17) und die Führungsmanschette (19) bzw. die Messhülse (31) und der Führungsstab (27) unterschiedliche Querschnittsformen aufweisen.

11. Sensorvorrichtung nach einem der Ansprüche 6 bis 8, **dadurch gekennzeichnet, dass** mechanische Mittel zum Ausgleichen unruhiger Flüssigkeitsoberflächen vorgesehen sind.

12. Sensorvorrichtung nach einem der Ansprüche 6 bis 9, **dadurch gekennzeichnet, dass** eine Steuerung zum Verarbeiten und Auswerten der Sensorsignale ausgebildet ist, wobei diese Steuerung Mittel zum Minimieren von Fehlern infolge unruhiger Flüssigkeitsoberflächen und infolge von Turbulenzen im Medium oberhalb der Flüssigkeit (11) umfasst.
